# FASCICULE DE BREVET EUROPEEN

(11) **EP 0 382 659 B1**
(45) Date de publication et mention de la délivrance du brevet: **10.05.1995**
(21) Numéro de dépôt: 90420063.1
(22) Date de dépôt: 05.02.1990
(51) Int. Cl.: C04B 35/52, C25C 3/12

(54) **Procédé de production d'une pâte carbonée destinée à être mise en forme en sortie d'un malaxeur**
Verfahren zur Herstellung einer karbonisierten Paste, bestimmt für die Formgebung im Ausgang eines Mischers
Method of making a carbonised paste to be shaped in a mixer exit

(30) Priorité: 06.02.1989 FR 8901917
(43) Date de publication de la demande: 16.08.1990
(73) Titulaire: ALUMINIUM PECHINEY, 92400 Courbevoie (FR)
(72) Inventeur: Jonville, Christian, F-73300 St. Jean de Maurienne (FR); Nicollin, Jean-Robert, F-73300 St. Jean de Maurienne (FR)
(74) Mandataire: Mougeot, Jean-Claude

(56) Documents cités:
- DE-B- 1 252 623
- FR-A- 2 025 967
- FR-A- 2 154 842

## Description

### DOMAINE TECHNIQUE DE L'INVENTION

L'invention concerne un procédé de production d'une pâte carbonéee, à base d'au moins un agrégat carboné et d'un liant organique cokéfiable. Elle a pour objet essentiel l'ajustement de la température de la pâte aux conditions particulières de sa mise en forme dès sa sortie du malaxeur.

### ETAT DE LA TECHNIQUE

Les agglomérés carbonés sont obtenus par cuisson de pièces mises en formes à partir d'une pâte carbonée résultant du malaxage d'un liant organique cokéfiable et d'un agrégat carboné en grains calibrés. Selon la destination des agglomérés, la nature du liant (brai de houille, brai de pétrole, brai liquide ou solide) et celle des grains carbonés (coke de houille, coke de pétrole, anthracite, etc...) peut varier sensiblement, mais on passe dans tous les cas par le stade d'un malaxage prolongé entre le liant et les grains carbonés (dont la répartition granulométrique est soigneusement contrôlée), à une température telle que le liant soit suffisamment fluide (140°C à 180°C. par exemple) et pendant une durée qui assure une imprégnation aussi parfaite que possible des grains carbonés par le liant. La qualité des électrodes (évaluée notamment par la mesure de la densité géométrique, de la résistivité électrique et de la résistance à l'écrasement) après cuisson, est étroitement liée à l'efficacité du malaxage.

Dans les ateliers modernes pour la production de pâtes carbonées, c'est le cas en particulier de la fabrication des anodes pour la production d'aluminium par le procédé HALL-HEROULT d'électrolyse d'alumine dans la cryolithe fondue, le malaxage du mélange liant plus grains carbonés est effectué dans une chaîne de malaxage continue qui comprend un ou parfois deux malaxeurs en série et dont la température est régulée entre 140 et 160°C, et qui alimente une installation de mise en forme par vibro-tassage.

Un type de malaxeur couramment utilisé est constitué par un corps tubulaire garni de dents fixes inclinées par rapport à l'axe du tube à l'intérieur duquel se meut, selon un mouvement de va et vient synchronisé avec un mouvement de rotation, un arbre lui-même muni de dents coopérant avec les dents fixes afin d'assurer le pétrissage et l'écoulement de la pâte carbonée. Les dents fixes sont disposées selon une ligne hélicoïdale, et l'amplitude du mouvement avant-arrière de l'arbre est ajustée au pas d'implantation des dents fixes. La sortie du (ou des) malaxeurs comporte une buse obturée par des clapets motorisés, l'ouverture et la fermeture de ces clapets pouvant être réglées en fonction de seuils de la puissance instantanée afin d'assurer un malaxage satisfaisant de la pâte et d'éviter le "bourrage" de l'appareil, c'està-dire son blocage en charge par suite d'un taux de remplissage excessif.

Ce type de malaxeur a été décrit notamment dans les brevets CH-A-515 061, CH 606 498 et FR-A-2 038 173 au nom de BUSS A.G. Un procédé pour en réguler la puissance de malaxage a été décrit dans la demande de brevet européen EP-A-157 987, au nom de l'Aluminium-Péchiney.
On peut également citer un second type de malaxeur continu, également très utilisé, qui comporte deux agitateurs parallèles tournant en sens inverses, et disposés côté à côte dans un carter de forme appropriée.
L'arbre principal porte des disques radiaux eux-mêmes reliés par des barres de malaxage. Parallèlement à cet arbre, l'arbre de nettoyage, porteur de cadres de nettoyage, tourne avec un rapport de vitesse de 4 à 6 fois plus élevée. Une ou plusieurs plaques de retenue, ainsi qu'une ou plusieurs pales de freinage disposées sur le corps ou le couvercle du malaxeur, du côté de l'arbre de nettoyage, permettent de contrôler l'écoulement de la pâte à l'intérieur de l'appareil.
Un malaxeur de ce type a été décrit dans la demande de brevet français FR-A-2 039 628 = US 3 687 628, au nom de H. LIST.

### EXPOSE DU PROBLEME

L'homme de l'art sait, par expérience, que, dans certains cas, par exemple la mise en forme des anodes pour les cuves d'électrolyse Hall-Héroult, les températures optimales de malaxage et de mise en forme ne coïncident pas.
Pour une bonne pénétration du brai dans les grains de coke et une bonne homogénéité de la pâte carbonée, il faut malaxer vers 160°C, alors que la mise en forme, par exemple par vibrotassage doit s'opérer à une température sensiblement plus basse (110-140°C) sous peine de voir les agglomérés après démoulage, et avant cuisson, s'affaisser bien au-delà des tolérances admises sur les dimension.
Il est donc nécessaire de refroidir la pâte malaxée de une à quelques dizaines de degrés avant mise en forme.
- Ainsi, FR 2.025.967 réalise dans un même appareil le malaxage et le réchauffage de la pâte carbonée puis le malaxage et le refroidissement à la température de mise en forme de la pâte carbonée par de l'eau maintenue sous pression dans l'enceinte quasi étanche de malaxage afin d'éviter sa vaporisation. Le mélange pâte/eau est extrait en continu dans un 3ème compartiment dit de décharge où s'effectue la séparation de la pâte carbonée, à la température de mise en forme, de l'eau qui se vaporise.
- Selon le brevet FR 2.154.842 (=US 3.885.983), d'Auminium Péchiney, on dispose deux malaxeurs en série. La pâte, sortant du premier malaxeur à 15°C/170°C tombe par gravité dans une colonne verticale qui débouche sur l'entrée du second malaxeur, cette colonne étant munie de moyens régulés de pulvérisation d'eau qui assurent un refroidissement contrôlé de la pâte jusque vers 110-115°C.

L'inconvénient de ce procédé est qu'il exige l'utilisation de deux malaxeurs, et que le second malaxeur, qui opère sur de la pâte refroidie, exige une puissance beaucoup plus importante, en raison de la viscosité accrue de la pâte carbonée ainsi refroidie.

### OBJET DE L'INVENTION :

l'idée à la base de l'invention consiste à introduire un fluide de refroidissement en un point convenablement choisi du malaxeur, de façon à opérer la plus grande partie du malaxage à la température optimale Th, et à achever le malaxage tout en effectuant un refroidissement de la pâte qui sort du malaxeur à une température Tb, inférieure à Th, et qui est la température optimale pour la mise en forme qui suit.

Pour la clarté de l'exposé, on conviendra d'appeler zone amont du malaxeur (par référence au sens d'avance de la pâte), la partie du malaxeur qui est munie d'un moyen régulé du chauffage de la pâte à la température Th, et zone aval la partie du malaxeur dépourvue de moyen de chauffage (ou tout au moins dans laquelle, s'il en existe un, il a préalablement été mis hors service), et dans laquelle on procède à l'introduction du fluide de refroidissement, qui sera normalement de l'eau.

De façon plus précise, l'objet de l'invention est un procédé de production d'une pâte carbonée destinée à être mise en forme à une température Tb près de la sortie d'un malaxeur tubulaire, dans lequel on introduit en continu au moins un agrégat carboné et un liant organique cokéfiable, ce malaxeur comportant des moyens de progression de la pâte de l'entrée vers la sortie associés à des moyens de malaxage disposés le long d'au moins un arbre commandé en rotation, le malaxeur comportant une zone amont munie de moyens de chauffage de la pâte à une température Th supérieure à Tb, et une zone aval de refroidissement débouchant sur l'orifice de sortie de la pâte carbonée à la température Tb, caractérisé en ce que on injecte de l'eau par au moins un orifice dans la zone aval du malaxeur en un point qui peut se situer entre l'entrée de cette zone et la moitié environ de sa longueur en allant vers l'aval et de telle sorte que la moitié au moins du travail de malaxage soit effectué à la température Th, et en ce que l'on évacue ensuite en continu l'eau vaporisée au contact de la pâte carbonée par un orifice approprié placé à l'extrémité du malaxeur à proximité de l'orifice de sortie de la pâte carbonée.

On a constaté, de façon tout à fait inattendue, que cette introduction d'eau dans la zone aval du malaxeur provoquait une diminution sensible de la puissance nécessaire au malaxage, alors que la logique aurait conduit à constater une augmentation, en raison de l'augmentation de viscosité de la pâte refroidie. Corrélavitement, le débit horaire du malaxeur augmente, dans une proportion pouvant aller jusqu'à 50%, la qualité des produits carbonés obtenus à partir des pâtes ainsi obtenues étant au moins égale à celle des pâtes obtenues en malaxeur non-refroidi.

### DESCRIPTION DE L'INVENTION

L'injection d'eau dans le malaxeur peut être effectuée par différents moyens, soit par au moins un orifice pratiqué dans la paroi latérale du malaxeur, soit au travers de l'arbre principal qui supporte les dents mobiles, cet arbre étant alors creux et muni d'orifices débouchant dans le malaxeur, soit de préférence, au travers d'au moins une des dents fixes.
On peut prévoir un ou plusieurs orifices d'injection, munis éventuellement de buses assurant une pulvérisation de l'eau. Il est bien entendu indispensable de prévoir un orifice d'évacuation de la vapeur d'eau, cet orifice étant généralement placé à l'extrémité du malaxeur à proximité de l'orifice de sortie de la pâte carbonée.
La position du point d'introduction de l'eau dans la zone aval du réacteur, ou du point situé, dans cette zone, le plus en amont s'il y a plusieurs points d'introduction, doit être tel que la moitié au moins du travail de malaxage soit effectué à la température "haute" Th.

L'injection d'eau est effectuée dans la zone aval, en un point qui peut se situer entre l'entrée de cette zone et la moitié environ de sa longueur, en allant vers l'aval.
L'homme de l'art déterminera la position optimale de ce point ainsi que le débit d'eau en fonction de l'écart entre Th et Tb et du type de malaxeur utilisé, étant entendu qu'il est préférable, pour des raisons pratiques de ne pas effectuer cette injection dans la zone amont du réacteur, qui comporte les moyens de chauffage de la pâte carbonée.

Lorsqu' il y a plusieurs points d'injection d'eau, cette observation s'applique à celui qui est situé le plus en amont.

La quantité d'eau à injecter peut se calculer, théoriquement, à partir du débit horaire de la pâte, du Δt entre température haute Th et température basse Tb, de la chaleur spécifique de la pâte carbonée, de la température de l'eau injectée, et de sa chaleur de vaporisation.

En pratique, on constate que le débit d'eau optimal se situe entre 1 et 10 litres d'eau par tonne de pâte carbonée, pour un Δt de l'ordre de 10 à 60°C.

### MISE EN OEUVRE

L'invention a été mise en oeuvre sur un malaxeur BUSS, d'un débit nominal de 18 tonnes par heure d'une pâte carbonée consituée de 86% d'agrégat carboné et de 14% de brai de houille.

La température de malaxage Th généralement comprise entre 120 et 180°C a été régulée à 160°C, et le débit d'eau a été régulé de façon à obtenir une température de sortie, Tb de la pâte, égale à 144 ± 2°C et correspondait à 18 litres d'eau par heure soit 1 litre par tonne et par heure.
L'injection d'eau a été réalisée au travers de l'une des dents fixes située sensiblement dans le milieu de la zone de malaxage.
Au cours d'une série d'essais on a fait varier le débit d'eau entre 20 et 150 litres par heure, (donc pour 18 tonnes de pâte). La température Tb a varié de 140 ± 2°C à 110 ± 2°C, plage habituelle de température pour réaliser le vibro tassage de la pâte carbonée.

On a constaté:
1°) que la puissance moyenne fournie par le moteur du malaxeur (alimenté en courant continu) a pu être réduite de 150 à 80 kW pour un même débit de pâte, du fait de l'injection d'eau.
2°) que, à puissance moyenne maintenue, et dans une même configuration du malaxeur (vitesse, position des clapets), le débit de pâte a augmenté, pendant la durée des essais de 12 à 18 tonnes/heure.
3°) que les tests de qualités effectués sur les anodes produites (densité apparente, conductivité électrique, résistance à la fissuration par choc thermique) donnaient des résultats pratiquement identiques avec ou sans injection d'eau.

Les tests en conditions réelles d'utilisation sur cuves d'électrolyse ont confirmé ces résultats.

La mise en oeuvre de l'invention permet, outre un gain important sur l'énergie consommée par le malaxage et/ou sur le débit du malaxeur, de réduire sensiblement l'investissement nécessaire pour produire de la pâte carbonée, car il suffit d'un seul malaxeur pour produire de la pâte parfaitement malaxée, à la température optimale pour la mise en forme, par exemple par vibro-tassage.

## Revendications

1. Procédé de production d'une pâte carbonée destinée à être mise en forme à une température Tb dès la sortie d'un malaxeur tubulaire, dans lequel on introduit en continu au moins un agrégat carboné et un liant organique cokéfiable, ce malaxeur comportant des moyens de progression de la pâte de l'entrée vers la sortie associés à des moyens de malaxage disposés le long d'au moins un arbre commandé en rotation, le malaxeur comportant une zone amont munie de moyens de chauffage de la pâte à une température Th supérieure à Tb, et une zone aval de refroidissement débouchant sur l'orifice de sortie de la pâte carbonée à la température Tb, caractérisé en ce que on injecte de l'eau par au moins un orifice dans la zone aval du malaxeur en un point qui peut se situer entre l'entrée de cette zone et la moitié environ de sa longueur en allant vers l'aval et de telle sorte que la moitié au moins du travail de malaxage soit effectué à la température Th, et en ce que l'on évacue ensuite en continu l'eau vaporisée au contact de la pâte carbonée par un orifice approprié placé à l'extrémité du malaxeur à proximité de l'orifice de sortie de la pâte carbonée.

2. Procédé selon revendication 1, caractérisé en ce que la température Tb est comprise entre 110 et 140°C.

3. Procédé selon revendication 1, caractérisé en ce que la température Th est comprise entre 120 et 180°C.

4. Procédé selon l'une quelconque des revendications 1 à 3, caractérisé en ce que le débit d'eau injectée dans le malaxeur est compris entre 1 et 10 litres par tonne de pâte carbonée et par heure.

## Claims

1. A process for the production of a carbonaceous paste which is intended to be shaped at a temperature Tb as soon as it issues from a tubular mixer, into which at least one carbonaceous aggregate and a cokable organic binder are continuously introduced, the mixer comprising means for progressins the paste from the intake towards the outlet, which are associated with mixing means disposed along at least one shaft which is driven in rotation, the mixer comprising an upstream zone provided with means for heating the paste to a temperature Th which is higher than Tb, and a downstream cooling zone which opens to the discharge orifice for the carbonaceous paste at temperature Tb, characterised in that water is injected by way of at least one orifice disposed in the downstream zone of the mixer, at a point which can be disposed between the intake of that zone and a position at approximately halfway along its length going in a downstream direction, such that at least half of the mixing work is carried out at the high temperature Th, and in that said water, after vaporisation upon coming into contact with the carbonaceous paste, is continuously discharged by way of a suitable orifice disposed at the end of the mixer, in the vicinity of the orifice for discharge of the carbonaceous paste.

2. A process according to claim 1 characterised in that the temperature Tb is between 110 and 140°C.

3. A process according to claim 1 characterised in that the temperature Th is between 120 and 180°C.

4. A process according to any one of claims 1 to 3 characterised in that the flow rate of water injected into the mixer is between 1 and 10 litres per tonne of carbonaceous paste and per hour.

## Patentansprüche

1. Verfahren zur Herstellung einer kohlenstoffhaltigen Paste, die zur Formgebung bei einer Temperatur Tb nach dem Auslaß eines rohrförmigen Knetmischers bestimmt ist, in den man kontinuierlich ein kohlenstoffhaltiges Material und ein verkokbares organisches Bindemittel einführt, welcher Knetmischer Mittel zur Fortbewegung der Paste vom Einlaß zum Auslaß in Verbindung mit längs wenigstens einer in Drehung versetzten Welle angeordneten Knetmitteln aufweist, wobei der Knetmischer eine mit Mitteln zum Heizen der Paste auf eine Temperatur Th über Tb versehene Stromaufzone und eine an der Auslaßöffnung mündende Stromabzone zur Abkühlung der kohlenstoffhaltigen Paste auf die Temperatur Tb aufweist,
**dadurch gekennzeichnet,**
daß man Wasser durch wenigstens eine Öffnung in der Stromabzone des Knetmischers an einem Punkt, der zwischen dem Eingang dieser Zone und etwa der Hälfte ihrer Länge in Stromabrichtung liegt, und derart einspritzt, daß wenigstens die Hälfte der Knetarbeit bei der Temperatur Th erfolgt, und daß man anschließend das in Kontakt mit der kohlenstoffhaltigen Paste verdampfte Wasser durch eine geeignete, am Ende des Knetmischers nahe der Auslaßöffnung der kohlenstoffhaltigen Paste angeordnete Öffnung abzieht.

2. Verfahren nach Anspruch 1,
dadurch gekennzeichnet, daß die Temperatur Tb im Bereich von 110 bis 140 °C liegt.

3. Verfahren nach Anspruch 1,
dadurch gekennzeichnet, daß die Temperatur Th im Bereich von 120 bis 180 °C liegt.

4. Verfahren nach irgendeinem der Ansprüche 1 bis 3,
dadurch gekennzeichnet, daß der Durchsatz des in den Knetmischer eingespritzten Wassers im Bereich von 1 bis 10 Litern je Tonne kohlenstoffhaltiger Paste und je Stunde liegt.
